# EUROPEAN PATENT APPLICATION

(11) **EP 4 546 527 A1**
(43) Date of publication of application: **30.04.2025**
(21) Application number: 23843306.4
(22) Date of filing: 17.07.2023
(51) Int. Cl.: H01M 50/242, H01M 50/211, H01M 50/358, H01M 50/249, H01M 50/383, H01M 10/6551, H01M 10/653, H01M 50/367

(54) **BATTERY PACK AND VEHICLE COMPRISING SAME**

(30) Priority: 20.07.2022 KR 20220089571; 20.07.2022 KR 20220089759; 27.04.2023 KR 20230055793
(71) Applicant: LG Energy Solution, Ltd., Seoul 07335 (KR)
(72) Inventor: PARK, Jeong-Hoon, Daejeon 34122 (KR); KIM, Soo-Youl, Daejeon 34122 (KR); JUNG, Hye-Mi, Daejeon 34122 (KR)
(74) Representative: Plasseraud IP
(86) International application number: PCT/KR2023/010226
(87) International publication number: WO 2024/019459

(57) **Abstract**

A battery pack according to the present disclosure includes a plurality of pouch-type battery cells; a pack case for storing the pouch-type battery cells in an inner space thereof; and a cell cover configured to at least partially surround an exterior of at least a first battery cell and a second battery cell, which are adj acent to each other among the plurality of pouch-type battery cells, in the inner space of the pack case, and the cell cover includes a partition cover unit; a first side cover unit; a second side cover unit; an upper cover unit; and a lower cover unit.

## Description

### TECHNICAL FIELD

The present disclosure relates to a battery pack and a vehicle including the same, and more particularly, to a battery pack with improved safety, and a vehicle including the same.

The present application claims priority to Korean Patent Application No. 10-2022-0089571 filed on July 20, 2022 in the Republic of Korea, Korean Patent Application No. 10-2022-0089759 filed on July 20, 2022 in the Republic of Korea, and Korean Patent Application No. 10-2023-0055793 filed on April 27, 2023 in the Republic of Korea, the disclosures of which are incorporated herein by reference.

### BACKGROUND ART

As technology development and demand for various mobile devices, electric vehicles, energy storage systems (ESS), etc. increase significantly, interest in and demand for secondary batteries as an energy source are rapidly increasing.

Conventionally, nickel cadmium batteries and nickel hydride batteries have been frequently used as secondary batteries, but recently, lithium secondary batteries having almost no memory effect compared to nickel-based secondary batteries to ensure free charge/discharge and having very low self-discharge rate and high energy density are frequently used.

A lithium secondary battery mainly uses a lithium-based oxide and a carbon material as a positive electrode active material and a negative electrode active material, respectively. The lithium secondary battery includes an electrode assembly in which a positive electrode plate and a negative electrode plate coated with the positive electrode active material and the negative electrode active material, respectively are disposed with a separator interposed therebetween, and a casing, namely a battery case, for sealing and accommodating the electrode assembly along with an electrolyte.

In general, depending on the shape of the casing, lithium secondary batteries may be classified into a can-type battery in which an electrode assembly is embedded in a metal can, and a pouch-type battery in which an electrode assembly is embedded in a pouch of an aluminum laminate sheet.

Recently, battery modules are widely used for driving or energy storage in medium to large-sized devices such as electric vehicles or energy storage systems.

A conventional battery pack includes at least one battery module and a control unit for controlling charging and discharging of the battery module inside the pack case. Here, the battery module is configured to include a plurality of battery cells inside the module case. That is, in the case of a conventional battery pack, a plurality of battery cells (secondary batteries) are stored inside the module case to form each battery module, and one or more battery modules are stored inside the pack case to form a battery pack. In particular, pouch-type batteries have advantages in many aspects, such as light weight and small dead space when stacked, but they are vulnerable to external shocks and have somewhat poor assembly properties. Therefore, it is common for a battery pack to be manufactured by first modularizing a plurality of cells and then storing them inside a pack case.

However, the conventional battery pack may be disadvantageous in terms of energy density, assembly, cooling, etc. due to modularization. In particular, swelling may occur in the pouch-type battery cells, and the conventional battery pack has a problem in that it is difficult to properly respond to this swelling situation.

Additionally, the conventional battery pack may be disadvantageous in terms of energy density, assembly, cooling, etc. due to modularization.

Additionally, the conventional battery module or battery pack may be vulnerable to thermal events. In particular, when a thermal event occurs inside a battery module or battery pack, there is a problem that thermal runaway may occur, resulting in flames and, in severe cases, explosion.

### DISCLOSURE

### Technical Problem

The present disclosure is designed to solve the problems of the related art, and therefore the present disclosure is directed to providing a battery pack that is excellent in various aspects such as swelling response performance, and a vehicle including the same.

In addition, another object of the present disclosure is to provide a battery pack that can ensure excellent safety in the event of a thermal event, and a vehicle including the same.

However, the technical problem to be solved by the present disclosure is not limited to the above-mentioned problem, and other problems not mentioned will be clearly understood by those skilled in the art from the present disclosure described below.

### Technical Solution

A battery pack according to one aspect of the present disclosure to accomplish the above object comprises: a plurality of pouch-type battery cells; a pack case configured to store the pouch-type battery cells in an inner space thereof; and a cell cover configured to at least partially surround an exterior of at least a first battery cell and a second battery cell, which are adjacent to each other among the plurality of pouch-type battery cells, in the inner space of the pack case, wherein the cell cover includes: a partition cover unit disposed between one side of the first battery cell and one side of the second battery cell to partition the first battery cell and the second battery cell; a first side cover unit facing the partition cover unit to cover the other side of the first battery cell; a second side cover unit facing the partition cover unit to cover the other side of the second battery cell; an upper cover unit connected to the a of the first side cover unit at a top of the partition cover unit to surround an upper side of the first battery cell; and a lower cover unit connected to a bottom of the second side cover unit at a bottom of the partition cover unit to surround a lower side of the second battery cell.

The first battery cell may be placed in a standing state between the first side cover unit and the partition cover unit.

The second battery cell may be placed in a standing state between the second side cover unit and the partition cover unit.

The cell cover may include a lower opening through which the lower part of the first battery cell is exposed toward the inner surface of the pack case; and an upper opening through which an upper part of the second battery cell is exposed toward the inner surface of the pack case.

The upper cover unit may have a first particle pocket configured to be spaced apart from the first battery cell and configured to collect particles ejected from the first battery cell when a thermal event occurs.

The lower cover unit may have a second particle pocket configured to be spaced apart from the second battery cell and configured to collect particles ejected from the second battery cell when a thermal event occurs.

The upper cover unit may be configured such that at least one of both side portions protrudes upward and a central portion connected to both side portions is concave downward.

The lower cover unit may be configured such that at least one of both side portions protrudes downward and a central portion connected to both side portions is concave upward.

The upper cover unit may gradually protrude from the central portion to at least one of the both side portions that protrudes upward.

The lower cover unit may gradually protrude from the central portion to at least one of the both side portions that protrudes downward.

The pack case may include a lower venting portion provided in at least some of positions corresponding to the lower opening so that gas generated from the first battery cell is discharged to the outside through the lower opening; and an upper venting portion provided in at least some of positions corresponding to the upper opening so that gas generated from the second battery cell is discharged to the outside through the upper opening.

The cell cover may have an insert pin protruding from at least one of the first side cover unit and the second side cover unit toward the inner surface of the pack case to be inserted into the pack case.

The pack case may have an insert pin receiving portion formed on the inner surface to accommodate the insert pin.

The insert pin and the insert pin receiving portion may be located adjacent to at least one of the upper venting portion and the lower venting portion.

The insert pin may include an insert portion inserted into the pack case; and a deformation portion provided at a location where the insert portion is connected to at least one of the first side cover unit and the second side cover unit.

The deformation portion may be provided at the same height as the inner surface of the pack case when the insert pin is inserted into the pack case.

The battery pack may include a thermal resin interposed in at least some of the space between the cell cover and the pack case and the space between the plurality of pouch-type battery cells and the pack case.

The thermal resin may not be provided in the spaces corresponding to the upper venting portion and the lower venting portion.

The cell cover may be configured to partially surround the pouch-type battery cell so that at least one side of the surrounded pouch-type battery cell is exposed to the outside.

The cell cover may be configured so that at least one side of the surrounded pouch-type battery cell is exposed toward the inner surface of the pack case.

The cell cover may be placed directly on the pack case.

The cell cover may include an insulating coating layer on the inner surface.

The cell cover may be provided in plurality to be adjacent to each other.

An adhesive member may be provided to at least one of the first side cover unit and the second side cover unit of the cell covers adjacent to each other.

A vehicle according to the present disclosure may comprise the battery pack according to the present disclosure.

### Advantageous Effects

According to one aspect of the present disclosure, a plurality of pouch-type battery cells can be stably stored inside the pack case without the need for a stacking frame such as a plastic cartridge or a separate module case. In particular, two or more pouch-type battery cells can be reliably protected by covering them with a cell cover.

According to another aspect of the present disclosure, gases generated from a pouch-type battery cell can be directed and discharged in a desired direction.

According to still another aspect of the present disclosure, when a thermal event occurs in a pouch-type battery cell, high-temperature dust, particles, etc. emitted from the battery cell may be collected in the particle pocket. Therefore, it can be effective in blocking the spread of flame by trapping high-temperature dust, particles, etc., which can be emitted from the pouch-type battery cell, within the particle pocket and preventing them from easily escaping out of the cell cover. High-temperature dust, particles, etc. act as ignition sources among the three elements of fire (combustible materials, ignition source, and oxygen), and thus, when they come into contact with combustible materials and oxygen outside the cell cover, they can ignite and the flame can rapidly spread inside the pack case.

According to still another aspect of the present disclosure, the cooling effect can be improved by increasing the contact area between the cell cover and thermal resin.

According to still another aspect of the present disclosure, the cell cover can absorb swelling of the pouch-type battery cell and prevent damage or breakage of the battery cell since excessive pressure is not applied to any part of the pouch-type battery cell.

According to still another aspect of the present disclosure, ease of assembly or fixation of the pack case and the cell cover can be secured. In particular, it can be configured to surround two or more pouch-type battery cells and also effectively maintain the erect state, namely the standing state, of the surrounded pouch-type battery cells.

According to still another aspect of the present disclosure, fixation between the pack case and the cell cover can be secured before the swelling phenomenon occurs, and at the same time, when the swelling phenomenon occurs, the venting region can be expanded to the adjacent venting portion. Therefore, as the venting region expands, gas can be discharged more quickly to relieve heat accumulation.

Additionally, according to the present disclosure, even if a thermal event occurs in any pouch-type battery cell, internal short circuit or structural collapse of the entire battery pack can be prevented.

According to the present disclosure, it is possible to provide a battery pack that is excellent in many aspects, such as swelling response performance, and a vehicle including the same. In addition, it is possible to provide a battery pack that can ensure excellent safety in the event of a thermal event, and a vehicle including the same.

### DESCRIPTION OF DRAWINGS

FIG. 1 is a diagram showing the appearance of a battery pack according to the present disclosure.
FIG. 2 is an exploded perspective view of the battery pack according to the present disclosure.
FIG. 3 is an exploded perspective view of a cell unit included in the battery pack according to the present disclosure.
FIG. 4 is a perspective view of a cell cover included in the battery pack according to the present disclosure.
FIG. 5 is a front view of the cell unit included in the battery pack according to the present disclosure.
FIG. 6 is a drawing showing another cell cover that can be included in the battery pack according to the present disclosure.
FIG. 7 is a front view of a cell unit that includes the cell cover of FIG. 6 and can be included in the battery pack according to the present disclosure.
FIG. 8 is a drawing schematically showing a partial cross-section of the battery pack according to the present disclosure.
FIG. 9 is a drawing showing the bottom of the cell unit included in the battery pack according to the present disclosure.
FIGS. 10 and 11 are drawings schematically showing a partial cross-section of the battery pack according to the present disclosure.
FIGS. 12 to 15 are diagrams to explain a modified example of the cell cover and the resulting expansion of the venting region when a thermal event occurs in the battery pack according to the present disclosure.
FIG. 16 is a drawing schematically showing a partial cross-section of the battery pack according to the present disclosure.
FIG. 17 is a drawing showing the bottom of the cell unit included in the battery pack according to the present disclosure.
FIG. 18 is a drawing showing a vehicle according to the present disclosure.

### BEST MODE

Hereinafter, preferred embodiments of the present disclosure will be described in detail with reference to the accompanying drawings. The accompanying drawings illustrate a preferred embodiment of the present disclosure and together with the foregoing disclosure, serve to provide further understanding of the technical features of the present disclosure, and thus, the present disclosure is not construed as being limited to the drawings. Like reference numerals refer to like elements. Additionally, in the drawings, the thickness, proportions and dimensions of components are exaggerated for effective explanation of technical content.

It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In this specification, terms indicating directions such as up, down, left, right, front, and back are used, but it is obvious to those skilled in the art of the present disclosure that these terms are only for convenience of explanation and they may vary depending on the location of the target object or the location of the observer.

Accordingly, the embodiments described in this specification and the configurations shown in the drawings are only one of the most preferred embodiments of the present disclosure and do not represent all technical details of the present disclosure, so it should be understood that there may be various equivalents and variations that can be replaced at the time of filing this application..

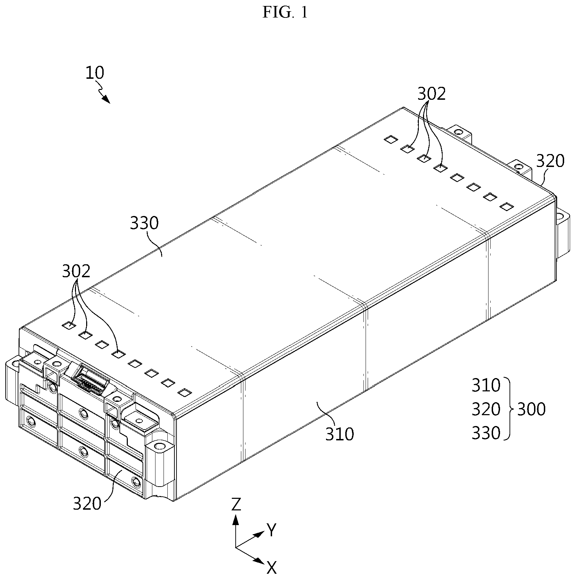

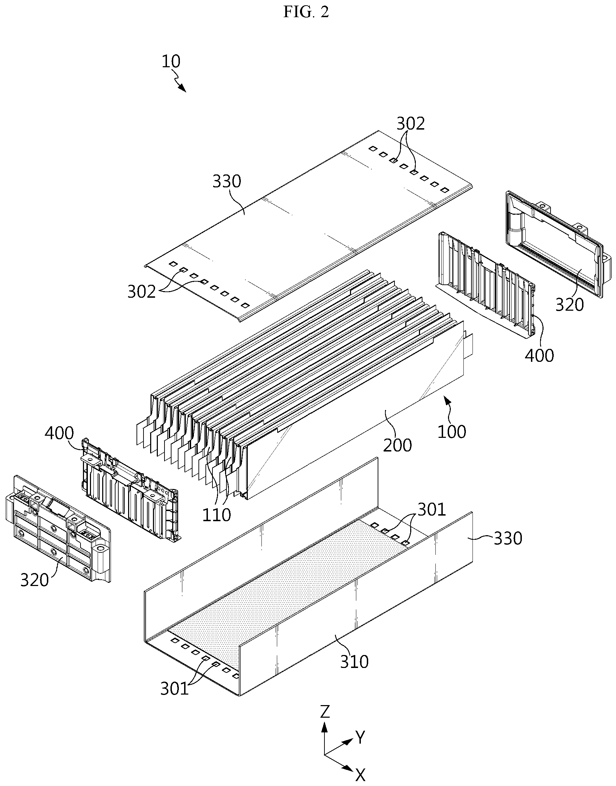

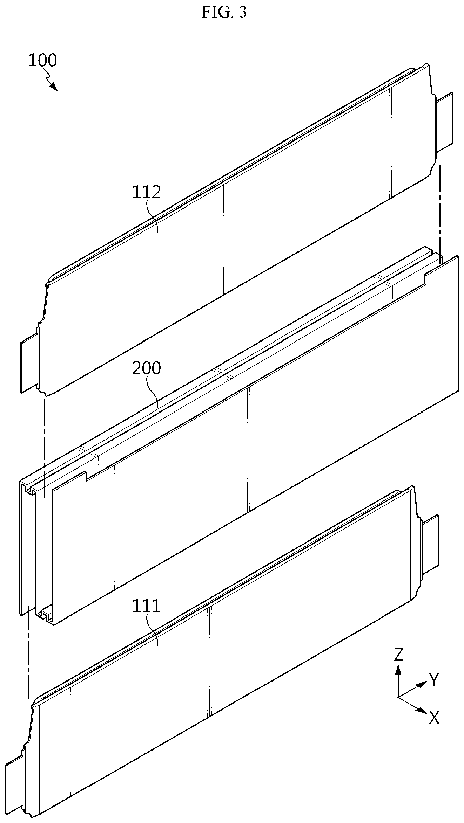

FIG. 1 is a diagram showing the appearance of a battery pack according to the present disclosure. FIG. 2 is an exploded perspective view of the battery pack according to the present disclosure. FIG. 3 is an exploded perspective view of a cell unit included in the battery pack according to the present disclosure.

Referring to FIGS. 1 to 3, the battery pack 10 according to the present disclosure may include a plurality of pouch-type battery cells 110, a pack case 300, and a cell cover 200.

The pouch-type battery cell 110 may include an electrode assembly, an electrolyte, and a pouch casing. A plurality of pouch-type battery cells 110 may be included in the battery pack 10. The plurality of pouch-type battery cells 110 may be stacked in at least one direction. For example, referring to FIG. 2, the plurality of pouch-type battery cells 110 may be stacked and arranged in left and right directions (X-axis direction). Moreover, the plurality of pouch-type battery cells 110 are arranged in left and right directions, but may also be arranged in a plurality of rows in front and rear directions (Y-axis direction). For example, the plurality of pouch-type battery cells 110 are stacked in the left and right directions to form one cell bundle, and two cell bundles may be arranged in the left and right directions and two cell bundles may be arranged in the front and rear directions so that cell bundles are arranged in a 2 × 2 arrangement within the pack case 300.

The pack case 300 may store the pouch-type battery cells 110 by forming a space inside. For example, the pack case 300 may include a case body 310, an end cover 320, and a top cover 330. The case body 310 is configured in a box shape with the top, front, and back open, and may store a plurality of pouch-type battery cells 110 in the inner space. The end cover 320 may be configured to cover the front opening (opening located in the negative direction of the Y-axis) and the rear opening (opening located in the positive direction of the Y-axis) of the case body 310. The top cover 330 may be configured in the form of a cover that covers the top opening (opening located in the positive direction of the Z-axis) of the case body 310. Meanwhile, the pack case 300 is not limited to the structure shown and explained here, and for example, may be configured as a combination of a bottom frame configured in a box shape with an open top to store a plurality of pouch-type battery cells 110 in the inner space and a top frame configured in a cover shape that covers the top opening of the bottom frame. The inner space of the pack case 300 may accommodate the cell cover 200, which will be described later, together with the plurality of pouch-type battery cells 110. The pack case 300 may be made of plastic or metal. In addition, the pack case 300 may adopt various pack case casing materials of at the time of filing the present disclosure.

The cell cover 200 may be configured to at least partially cover the exterior of at least the first battery cell 111 and the second battery cell 112 that are adjacent to each other among the plurality of pouch-type battery cells 110 in the inner space of the pack case 300.

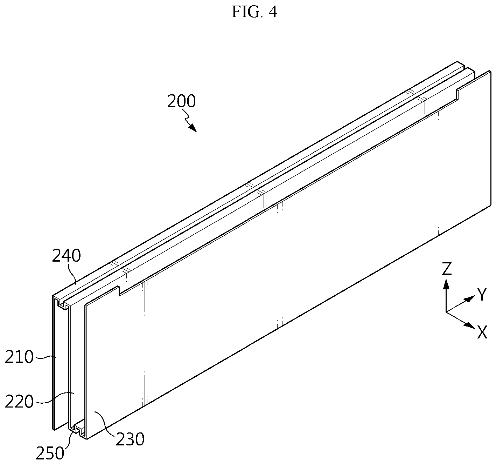

FIG. 4 is a perspective view of a cell cover included in the cell unit shown in FIG. 3.

Referring further to FIG. 4, the cell cover 200 may include a partition cover unit 220, a first side cover unit 210, a second side cover unit 230, an upper cover unit 240, and a lower cover unit 250.

The partition cover unit 220 may be configured to partition the first battery cell 111 and the second battery cell 112. The partition cover unit 220 may be placed between one side of the first battery cell 111 and one side of the second battery cell 112. The partition cover unit 220 may be placed between the right side (side in the positive direction of the X-axis) of the first battery cell 111 and the left side (side in the negative direction of the X-axis) of the second battery cell 112. The partition cover unit 220 may be in the form of a plate.

The first side cover unit 210 may be configured to cover the other side of the first battery cell 111. The first side cover unit 210 may face the partition cover unit 220. The first side cover unit 210 may cover the left side (side in the negative direction of the X-axis) of the first battery cell 111 facing the right side of the first battery cell 111 covered by the partition cover unit 220. The first side cover unit 210 may be in the form of a plate.

The second side cover unit 230 may be configured to cover the other side of the second battery cell 112. The second side cover unit 230 may face the partition cover unit 220. The second side cover unit 230 may cover the right side (side in the positive direction of the X-axis) of the second battery cell 112 facing the left side of the second battery cell 112 covered by the partition cover unit 220. The second side cover unit 230 may be in the form of a plate.

The first side cover unit 210, the partition cover unit 220, and the second side cover unit 230 may be side by side with each other. Accordingly, the configuration in which the first battery cell 111 and the second battery cell 112 are stacked side by side in the left and right directions in a standing state may be stably maintained. The upper cover unit 240 may be configured to cover the upper side (the positive direction of the Z-axis) of the first battery cell 111. The upper cover unit 240 may be connected from the top of the partition cover unit 220 to the top of the first side cover unit 210. The upper cover unit 240 may be in the form of a plate. The lower cover unit 250 may be configured to cover the lower side (the negative direction of the Z-axis) of the second battery cell 112. The lower cover unit 250 may be connected from the bottom of the partition cover unit 220 to the bottom of the second side cover unit 230. The lower cover unit 250 may be in the form of a plate.

The first side cover unit 210 may be configured to extend downward from one end of the upper cover unit 240. For example, the first side cover unit 210 may be configured to extend long downward from the left end of the upper cover unit 240. The partition cover unit 220 may be positioned to be spaced apart from the first side cover unit 210 in the horizontal direction. Additionally, the partition cover unit 220 may be configured to extend downward from the other end of the upper cover unit 240. For example, the partition cover unit 220 may be configured to extend long downward from the right end of the upper cover unit 240. The first side cover unit 210 and the partition cover unit 220 may be configured to cover a wide surface of the first battery cell 111 accommodated inside. At this time, the first side cover unit 210 and the partition cover unit 220 may be configured in a bent form from the upper cover unit 240.

The partition cover unit 220 may be configured to extend upward from one end of the lower cover unit 250. For example, the partition cover unit 220 may be configured to extend long upward from the left end of the lower cover unit 250. The second side cover unit 230 may be positioned to be spaced apart from the partition cover unit 220 in the horizontal direction. Additionally, the second side cover unit 230 may be configured to extend upward from the other end of the lower cover unit 250. For example, the second side cover unit 230 may be configured to extend upward from the right end of the lower cover unit 250. The partition cover unit 220 and the second side cover unit 230 may be configured to cover the wide surface of the second battery cell 112 accommodated therein. At this time, the partition cover unit 220 and the second side cover unit 230 may be configured in a bent form from the lower cover unit 250.

The partition cover unit 220 may be configured to extend upward from one end of the lower cover unit 250. For example, the partition cover unit 220 may be configured to extend long upward from the left end of the lower cover unit 250. The second side cover unit 230 may be positioned to be spaced apart from the partition cover unit 220 in the horizontal direction. Additionally, the second side cover unit 230 may be configured to extend upward from the other end of the lower cover unit 250. For example, the second side cover unit 230 may be configured to extend long upward from the right end of the lower cover unit 250. The partition cover unit 220 and the second side cover unit 230 may be configured to cover the wide surface of the second battery cell 112 accommodated therein. At this time, the partition cover unit 220 and the second side cover unit 230 may be configured in a bent form from the lower cover unit 250.

In this embodiment, the inner space may be defined by the first side cover unit 210, the partition cover unit 220, the second side cover unit 230, the upper cover unit 240, and the lower cover unit 250. Additionally, the cell cover 200 may accommodate two or more pouch-type battery cells 110 in the inner space defined in this way.

At least some of the partition cover unit 220, the first side cover unit 210, the second side cover unit 230, the upper cover unit 240, and the lower cover unit 250 may be integrated with each other. The partition cover unit 220, the first side cover unit 210, the second side cover unit 230, the upper cover unit 240, and the lower cover unit 250 may be formed by bending one plate. In this way, the configuration of forming a bent portion on one plate to form the cell cover 200 may be implemented in various ways, such as pressing or roll forming. According to this embodiment of the present disclosure, the cell cover 200 may be manufactured simpler. Alternatively, the partition cover unit 220, the first side cover unit 210, the second side cover unit 230, the upper cover unit 240, and the lower cover unit 250 may be manufactured separately and then connected to each other through adhesion, fitting, welding, or bolting. The cell cover 200 may be configured to cover not only the first battery cell 111 and the second battery cell 112 that are adjacent to each other, but also another pouch-type battery cell 110. For example, when the plurality of pouch-type battery cells 110 are erected in the vertical direction (Z-axis direction) and stacked in the left and right directions, the cell cover 200 may be configured to surround the first battery cell 111 and a battery cell located adjacent to the first battery cell 111 and spaced apart from the second battery cell 112 together between the first side cover unit 210 and the partition cover unit 220. That is, the number of pouch-type battery cells 110 surrounded between the first side cover unit 210 and the partition cover unit 220 may be two or more. Likewise, the cell cover 200 may be configured to surround the second battery cell 112 and a battery cell located adjacent to the second battery cell 112 and spaced apart from the first battery cell 111 together between the second side cover unit 230 and the partition cover unit 220. That is, the number of pouch-type battery cells 110 surrounded between the second side cover unit 230 and the partition cover unit 220 may be two or more. However, the total number of battery cells covered by the cell cover 200 may vary as desired. Additionally, based on the partition cover unit 220 of the cell cover 200, the number of battery cells covered by the left and right sides is not necessarily limited to being the same. The number of pouch-type battery cells 110 surrounded by the cell cover 200 can be easily changed. In particular, by changing the width of the cell cover 200 and the width of the upper cover unit 240 and the lower cover unit 250, the number of unit battery cells accommodated by the cell cover 200 can be easily changed. Therefore, in this case, capacity or output by one cell cover 200 can be easily changed.

The cell cover 200 may be configured to group and unitize the plurality of pouch-type battery cells 110 included in the battery pack 10. One cell cover 200 may constitute one cell unit 100. For example, FIG. 3 shows one cell unit 100, and FIG. 2 shows a plurality of cell units 100. A configuration where the cell cover 200 surrounds at least three sides of the first battery cell 111 and at least three sides of the second battery cell 112, and the busbar assembly 400 for each cell unit 100 is located on the side that is not surrounded by each cell cover 200 can be easily implemented.

The battery pack 10 may include a plurality of cell units 100, and in this case, a plurality of cell covers 200 may be included in the battery pack 10. Since the cell cover 200 is configured to surround two or more pouch-type battery cells 110, the battery pack 10 may include a smaller number of cell covers 200 than the number of pouch-type battery cells 110. The pouch-type battery cells 110 in the cell unit 100 may be electrically connected in series and/or parallel through the busbar assembly 400, etc.

The cell unit 100 may also be expressed as a cell bank. According to the present disclosure, since the cell cover 200 is designed to separate cell banks from each other, thermal runaway and explosion can be prevented for each cell bank.

Meanwhile, the cell cover 200 used as an example here may be said to have a cross-sectional configuration viewed from the front that is roughly similar to a 'Z' shape. Therefore, in this case, the cell cover 200 may be referred to as 'Z-fin'. In constructing a Z-pin, for example, it may be conceivable to combine a pin whose cross-sectional configuration viewed from the front side is approximately 'n' and a pin of approximately 'U'. However, if the Z-pin is configured to include the first side cover unit 210, the partition cover unit 220, and the second side cover unit 230 as suggested in the present disclosure, the part where both pins of the 'n' shape pin and the 'U' shape pin are combined may be made thin using one partition cover unit 220, so the thickness of the cell cover 200 in the battery pack 10 can be reduced by the thickness of the partition cover unit 220 × the number of cell banks.

A plurality of cell covers 200 may be included in the battery pack 10. In this case, an adhesive member may be interposed between the cell covers 200. For example, an adhesive member may be interposed between the first side cover unit 210 and/or the second side cover unit 230, where the two cell covers 200 face each other, to adhesively fix them. Through this adhesive configuration, the connection configuration between several cell covers 200 may be made more robust. The adhesive member may be insulating to achieve insulation between the cell covers 200, which may be made of a metal material. Additionally, the adhesive member may be thermally conductive. Through this adhesion, the cell covers 200 are firmly coupled to the battery cells 110 and may help discharge heat generated in the battery cell 110 to the outside of the battery cell 110.

In addition, a thermal barrier (not shown) may be further included between adjacent cell covers 200. The thermal barrier may be made in the form of a pad made of insulating material or flame retardant material, and may preferably be made of a compressible material. Preferably, the thermal barrier may be configured to be in close contact with the cell covers 200 between adjacent cell covers 200. Accordingly, the thermal barrier may be configured to suppress swelling phenomenon that may occur in the pouch-type battery cell 110. In addition, the thermal barrier may delay the spread of flame due to thermal runaway, prevent heat transfer, and suppress swelling phenomenon that may occur in the pouch-type battery cell 110, further ensuring the structural stability of the battery pack 10.

The cell cover 200 may include an insulating coating layer on the inner surface. The insulating coating layer may be prepared by coating, applying, or attaching an insulating material such as silicone resin, polyamide, or rubber. The insulating coating layer may maximize the insulating coating effect with a minimum amount of coating. In addition, the insulating coating layer is applied to the inner surface of the cell cover 200, so the insulation between the pouch-type battery cell 110 and the cell cover 200 may be strengthened.

The cell cover 200 may be made of various materials to ensure rigidity. In particular, the cell cover 200 may be made of metal material. In the case of this metal material, the stacked state of the pouch-type battery cells 110 may be maintained more stably and the pouch-type battery cells 110 may be more safely protected from external shock. The cell cover 200 may be made of SUS material. For example, the cell cover 200 may be entirely made of SUS material.

When the cell cover 200 is made of a steel material as above, it has excellent mechanical strength and rigidity, so it may more stably support the stacked state of the pouch-type battery cells 110. Additionally, in this case, it is possible to more effectively prevent damage or breakage of the pouch-type battery cells 110 from external impacts, such as needles. Additionally, in this case, the pouch-type battery cells 110 may be handled easier. Additionally, due to the high melting point, the overall structure may be maintained stably when a flame occurs from the battery cell. Because this material has a higher melting point than aluminum, it does not melt even in flames emitted from a battery cell and its shape may be maintained stably. Therefore, excellent flame propagation prevention or delay effects between battery cells, venting control effects, etc. can be secured.

In addition, by surrounding the battery cells 110 with the cell cover 200, the battery cells 110 may be easily stacked directly inside the pack case 300. Accordingly, the assembly and mechanical stability of the battery pack 10 may be improved.

According to this configuration in the present disclosure, a plurality of pouch-type battery cells 110 may be stably stored inside the pack case 300 without the need for a stacking frame such as a plastic cartridge or a separate module case. In particular, two or more pouch-type battery cells 110 may be surrounded by the cell cover 200 and reliably protected.

Moreover, in the case of the present disclosure, a CTP (Cell To Pack) type battery pack using the pouch-type battery cells 110 may be implemented more efficiently. In other words, rather than storing the pouch-type battery cells 110 inside a separate module case and storing this module case inside the pack case 300, the battery pack 10 may be provided to store the pouch-type battery cells 110 directly inside the pack case 300. At this time, at least one side of the pouch-type battery cell 110 may be exposed to the outside of the cell cover 200 and placed to directly face the pack case 300.

Therefore, according to this aspect of the present disclosure, the battery pack 10 has no need to additionally include a module case, a stacking frame, or fastening members such as bolts to maintain the stacked state of the cells. Accordingly, the space occupied by other components, such as a module case or a stacking frame, or the resulting space for securing tolerances can be eliminated. Therefore, since the battery cells may occupy an additional space as much as the space from which other components are removed, the energy density of the battery pack 10 may be further improved.

Additionally, according to this aspect of the present disclosure, since a module case, a stacking frame, bolts, etc. are not provided, the volume and weight of the battery pack 10 may be reduced and the manufacturing process may be simplified.

Additionally, according to this aspect of the present disclosure, the pouch-type battery cell 110 may be handled easier. For example, when storing a plurality of pouch-type battery cells 110 inside the pack case 300, the pouch-type battery cells 110 may be gripped by a jig or the like. At this time, the jig does not directly grip the pouch-type battery cell 110, but may grip the cell cover 200 surrounding the pouch-type battery cell 110. Therefore, damage or breakage of the pouch-type battery cell 110 caused by the jig may be prevented.

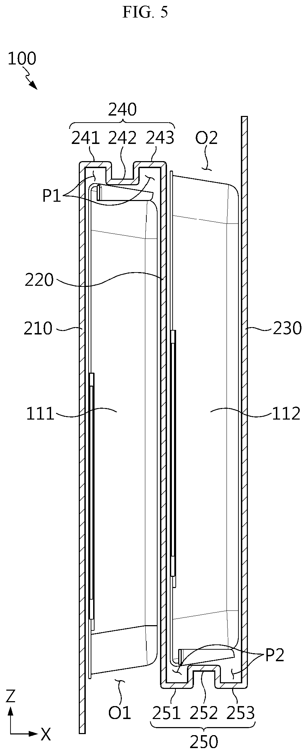

FIG. 5 is a front view of the cell unit included in the battery pack according to the present disclosure.

Referring to FIGS. 4 and 5, the cell cover 200 may have a lower opening O1 and an upper opening O2.

The lower opening O1 may be configured to expose the lower part of the first battery cell 111 toward the inner surface of the pack case 300. The lower opening O1 may be located on the opposite side of the upper cover unit 240.

The upper opening O2 may be configured to expose the upper part of the second battery cell 112 toward the inner surface of the pack case 300. The upper opening O3 may be located on the opposite side of the lower cover unit 250.

According to this configuration of the present disclosure, the gas generated from the first battery cell 111 may be discharged downward (in the negative direction of the Z-axis) of the first battery cell 111 through the lower opening O1, and the gas generated from the second battery cell 112 may be discharged upward (in the positive direction of the Z-axis) of the second battery cell 112 through the upper opening O2. Therefore, the gas generated from the battery cell 110 may be guided and discharged in a desired direction.

Continuing to refer to FIGS. 4 and 5, the upper cover unit 240 may be provided with a first particle pocket P1. The lower cover unit 250 may be provided with a second particle pocket P2.

The first particle pocket P1 may be configured to be spaced apart from the first battery cell 111. The first particle pocket P1 may be configured to collect particles ejected from the first battery cell 111 when a thermal event occurs. A certain space defined as the first particle pocket P1 may be provided between the upper cover unit 240 and the upper part of the first battery cell 111.

The second particle pocket P2 may be configured to be spaced apart from the second battery cell 112. The second particle pocket P2 may be configured to collect particles ejected from the second battery cell 112 when a thermal event occurs. A certain space defined as the second particle pocket P2 may be provided between the lower cover unit 250 and the lower part of the second battery cell 112.

According to this configuration of the present disclosure, when a thermal event occurs in the pouch-type battery cell 110, high-temperature dust, particles, etc. emitted from the battery cell 110 may be collected in the particle pockets P1, P2. High-temperature dust and particles once trapped in the particle pockets P1, P2 become difficult to escape from the corresponding space. In addition, the high-temperature dust and particles may be cooled while staying in the particle pockets P1, P2, allowing them to be discharged at a much lower temperature. Therefore, it may be effective in blocking the spread of flame by trapping high-temperature dust, particles, etc., which may be emitted from the pouch-type battery cell 110, within the particle pockets P1, P2 not to easily escape out of the cell cover 200. High-temperature dust, particles, etc. act as ignition sources among the three elements of fire (combustible materials, ignition source, and oxygen), and thus, when they encounter combustible materials and oxygen outside the cell cover 200, they may be ignited and the flame may spread rapidly inside the pack case 300.

According to the present disclosure, the external discharge of the ignition source is prevented or suppressed by the cell cover 200, especially by the particle pockets P1, P2, so that the occurrence of ignition in the outer space of the cell cover 200, such as the inner space or the outer space of the pack case 300, may be blocked. Therefore, according to an aspect of the present disclosure, internal short circuits or structural collapse can be prevented even when a thermal event occurs.

Additionally, mesh members may be formed inside the particle pockets P1, P2. The mesh member may be provided in the form of overlapping several porous metal plates to function like a flame arrester.

According to this configuration, the movement of flames, high-temperature dust, particles, etc. within the particle pockets P1, P2 may be further restricted, thereby preventing flame spread to other pouch-type battery cells 110 in which no thermal event has occurred.

Referring again to FIGS. 4 and 5, the upper cover unit 240 may be configured such that at least one of both side portions 241, 243 protrudes upward (in the positive direction of the Z-axis) and a central portion 242 connected to both side portions 241, 243 is concave downward (in the negative direction of the Z-axis). The upper cover unit 240 may be roughly divided into three parts in the X-axis direction so that both side portions 241, 243 protrude in the positive direction of the Z-axis and the central portion 242 located in the middle is concave in the negative direction of the Z-axis. The particle pocket P1 may be defined within the cell cover 200 by both side portions 241, 243 of a protruding shape.

The lower cover unit 250 may be configured such that at least one of both side portions 251, 253 protrudes downward (in the negative direction of the Z-axis), and the central portion 252 connected to both side portions 251, 253 is concave upward (in the positive direction of the Z-axis). The lower cover unit 250 may be roughly divided into three parts in the X-axis direction so that both side portions 251, 253 protrude in the negative direction of the Z-axis, and the central portion 252 located in the middle is concave in the positive direction of the Z-axis. The particle pocket P2 may be defined within the cell cover 200 by both side portions 251, 253 of a protruding shape.

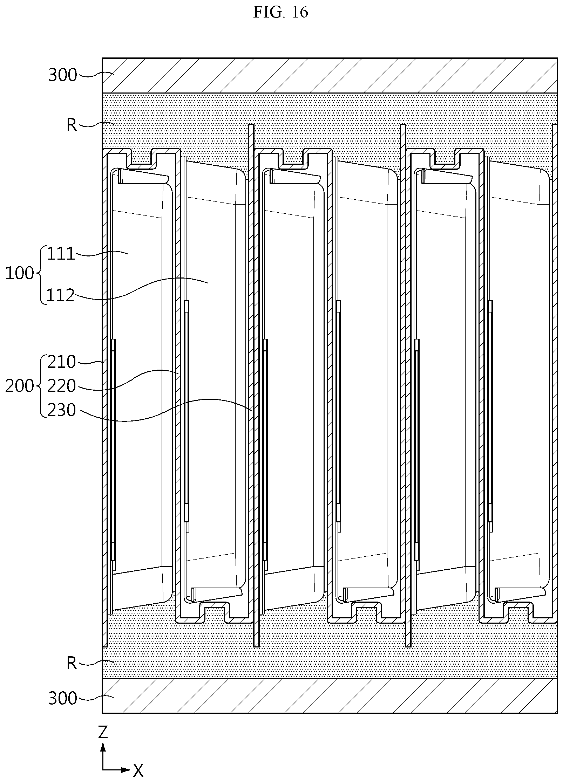

According to this configuration of the present disclosure, high-temperature dust, particles, etc., which may be emitted from the pouch-type battery cell 110, may be trapped in the particle pockets P1, P2, preventing them from easily escaping out of the cell cover 200 and thus more effectively blocking the spread of flame. In addition, a thermal resin (see R in FIG. 16), which will be described below, may be filled in the concave portion due to the central portion 242 between the particle pocket P1 and the concave portion due to the central portion 252 between the particle pocket P2, so that the contact area of the thermal resin R with the cell cover 200 may be increased. Therefore, since the contact area with the thermal resin R is larger than the case when the upper cover unit 240 and the lower cover unit 250 are completely flat, heat transfer may be enhanced and the cooling effect may be improved.

The cell cover 200 including the particle pockets P1, P2 as above corresponds to including a plurality of bent portions in its shape, so it can be manufactured by bending a single plate by pressing or roll forming, but it can also be more preferably manufactured in a batch by bending a single plate by extrusion. According to this embodiment of the present disclosure, the cell cover 200 may be manufactured simpler.

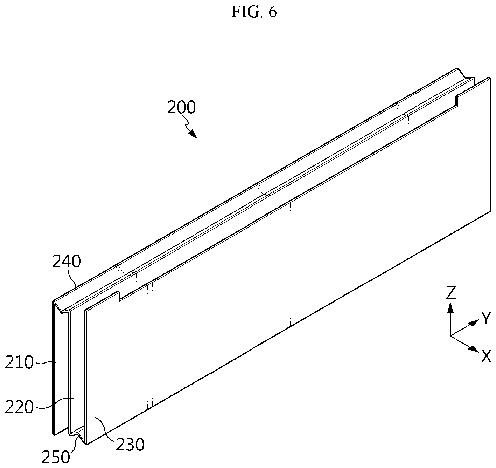

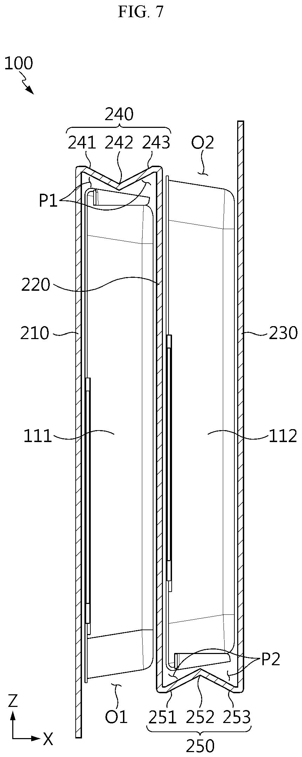

FIG. 6 is a drawing showing another cell cover that can be included in the battery pack according to the present disclosure. FIG. 7 is a front view of a cell unit that includes the cell cover of FIG. 6 and can be included in the battery pack according to the present disclosure.

Referring to FIGS. 6 and 7, the upper cover unit 240 may gradually protrude from the central portion 242 to at least one of both side portions 241, 243 that protrude upward (in the positive direction of the Z-axis). The upper cover unit 240 may be configured in approximately an 'M' shape when both side portions 241, 243 protrude upward.

The lower cover unit 250 may gradually protrude from the central portion 252 to at least one of both side portions 251, 253 protruding downward (in the negative direction of the Z-axis). The lower cover unit 250 may be configured in an approximately 'W' shape when both side portions 251, 253 protrude downward.

According to this configuration of the present disclosure, when swelling phenomenon occurs in the pouch-type battery cell 110, the upper cover unit 240 and/or the lower cover unit 250 are at least partially flattened, thereby absorbing swelling of the pouch-type battery cell 110. Also, damage or destruction of the battery cell may be prevented because excessive pressure is not applied to any part of the pouch-type battery cell 110. In addition, expansion of the venting region, which will be explained below, is possible.

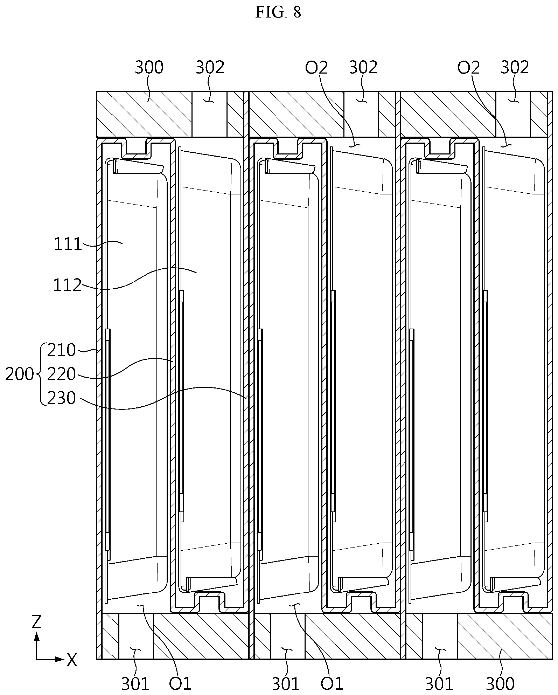

FIG. 8 is a drawing schematically showing a partial cross-section of the battery pack according to the present disclosure.

Referring to FIG. 8, the pack case 300 may be provided with a lower venting portion 301. Additionally, the pack case 300 may be provided with an upper venting portion 302.

The lower venting portion 301 may be configured to allow gas generated from the first battery cell 111 to be discharged to the outside through the lower opening O1. The lower venting portion 301 may be provided in at least some of the positions corresponding to the lower opening O1.

The upper venting portion 302 may be configured to allow gas generated from the second battery cell 112 to be discharged to the outside through the upper opening O2. The upper venting portion 302 may be provided in at least some of the positions corresponding to the upper opening O2.

The lower venting portion 301 and the upper venting portion 302 may be provided in the lower and/or upper part of the pack case 300 depending on the configuration of the battery pack 10. The lower venting portion 301 and the upper venting portion 302 may be provided at a location corresponding to at least one cell unit 100 depending on the configuration of the battery pack 10 including a plurality of cell units 100.

The lower venting portion 301 and the upper venting portion 302 penetrate the pack case 300 and may have a simple hole shape. In addition, the lower venting portion 301 and the upper venting portion 302 may be a specific device that is not completely open but is closed in a normal state and can be opened depending on changes in pressure or temperature. The lower venting portion 301 and the upper venting portion 302 may be, for example, one-way valves.

According to this configuration of the present disclosure, gas generated from the pouch-type battery cell 110 may be discharged to the upper and/or lower part of the battery pack 10. By providing the upper venting portion 302 and the lower venting portion 301 at a location where gas is desired to be discharged, the gas may be discharged in a desired direction. In addition, since the cell cover 200 is equipped with both the lower opening O1 and the upper opening O2, the pack case 300 may include both the lower venting portion 301 corresponding to the lower opening O1 and the upper venting portion 302 corresponding to the upper opening O2. Compared to forming a venting portion only at the upper or lower part of the pack case 300, in this case, it is possible not only to form more venting parts over a wider area, but also to allow simultaneous venting at the upper and lower parts of the battery pack 10, thereby quickly relieving internal pressure.

As such, according to the present disclosure, flame or gas may be guided and discharged in a preset direction. In this case, even if thermal runaway occurs in one of the battery cells 110, flame or gas generated from the battery cell 110 can be discharged only in a preset direction through the cell cover 200. Even if thermal runaway occurs in one battery cell 110, the impact of the thermal runaway on other battery cells 110 can be minimized. In the present disclosure, venting gas can be discharged upward and downward, and since other battery cells 110 are not located in that direction, the effect of preventing thermal runaway from transferring to other battery cells 110 is significant.

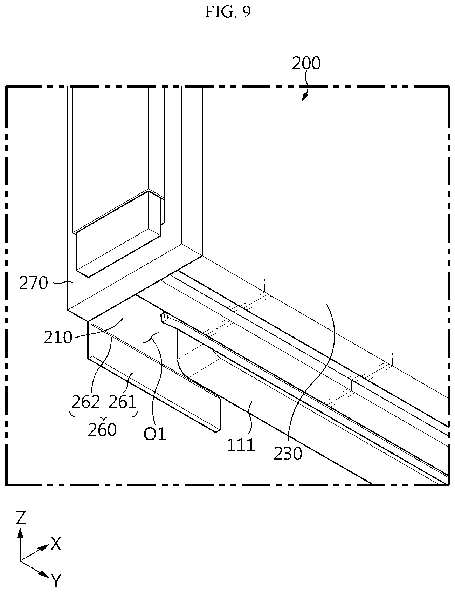

FIG. 9 is a drawing showing the bottom of the cell unit included in the battery pack according to the present disclosure.

Referring to FIG. 9, the cell cover 200 may be provided with an insert pin 260.

The insert pin 260 may be configured to be inserted into the pack case 300. The insert pin 260 may protrude toward the inner surface of the pack case 300 from at least one of the first side cover unit 210 and the second side cover unit 230. Referring to FIG. 4, the insert pin 260 may be formed to protrude in the negative direction of the Z-axis from at least one of both side portions in the longitudinal direction (the extending direction of the Y-axis) of the first side cover unit 210. Likewise, the insert pin 260 may be formed to protrude in the positive direction of the Z-axis from at least one of both side portions in the longitudinal direction (the extending direction of the Y-axis) of the second side cover unit 230. The insert pin 260 may be located adjacent to at least one of the upper venting portion 302 and the lower venting portion 301.

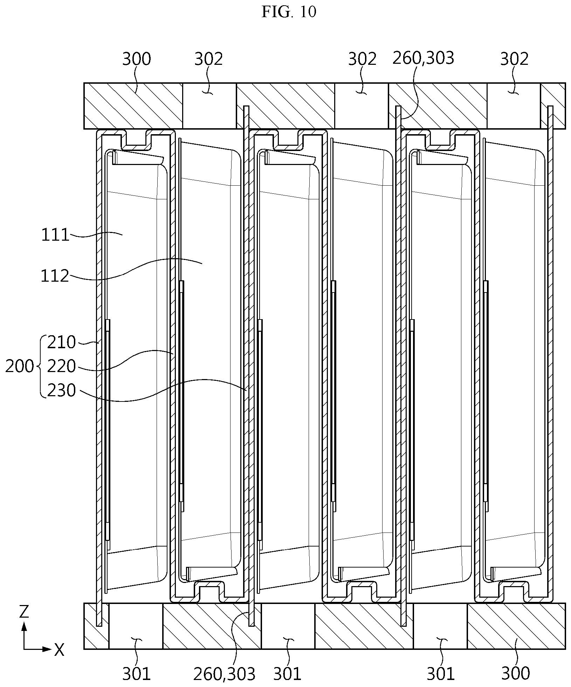

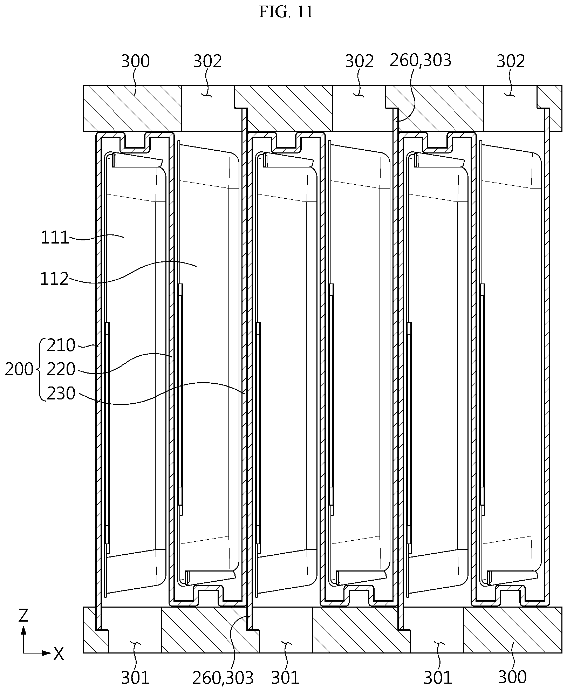

FIGS. 10 and 11 are drawings schematically showing a partial cross-section of the battery pack according to the present disclosure.

Referring to FIGS. 10 and 11, the pack case 300 may be provided with an insert pin receiving portion 303.

The insert pin receiving portion 303 may be formed on the inner surface of the pack case 300 to receive the insert pin 260. The insert pin receiving portion 303 may have a shape corresponding to the shape of the insert pin 260. For example, referring to FIG. 10, the insert pin receiving portion 303 may be in the form of a groove formed on the inner surface of the pack case 300 so that the insert pin 260 can be inserted. Referring to FIG. 11, the insert pin receiving portion 303 may have a multi-stage shape formed in the upper venting portion 302 and the lower venting portion 301 so that the insert pin 260 can be seated. The insert pin receiving portion 303 may be located adjacent to at least one of the upper venting portion 302 and the lower venting portion 301.

According to this configuration of the present disclosure, ease of assembly or fixation of the pack case 300 and the cell cover 200 may be secured. In particular, it can be configured to effectively maintain the standing state of the surrounded pouch-type battery cells 110 while surrounding two or more pouch-type battery cells 110.

Additionally, due to the structure of the insert pin 260 and the insert pin receiving portion 303, gas generated from the pouch-type battery cell 110 may be guided to the upper venting portion 302 and the lower venting portion 301. In this case, referring to FIG. 9, a side cover 270 is provided to cover at least one of the front and rear sides of the cell unit 100 to block gas generated from the pouch-type battery cell 110 at the front or rear side and further effectively guide the gas to the upper venting portion 302 and the lower venting portion 301.

Referring again to FIGS. 9 to 11, the insert pin 260 may include an insert portion 261 and a deformation portion 262.

The insert portion 261 may be inserted into the pack case 300. The insert portion 261 has a substantially plate shape and may protrude from at least one of the first side cover unit 210 and the second side cover unit 230.

The deformation portion 262 may be provided at a location where the insert portion 261 is connected to at least one of the first side cover unit 210 and the second side cover unit 230. The deformation portion 262 may be configured to have a thinner thickness or lower rigidity compared to the insert portion 261 so that deformation occurs easily. For example, referring to FIG. 9, the deformation portion 262 may have a groove of a certain depth extending along the X-axis direction where the insert portion 261 and the first side cover unit 210 are connected. The deformation portion 262 may be provided at the same height as the inner surface of the pack case 300 when the insert pin 260 is inserted into the pack case 300.

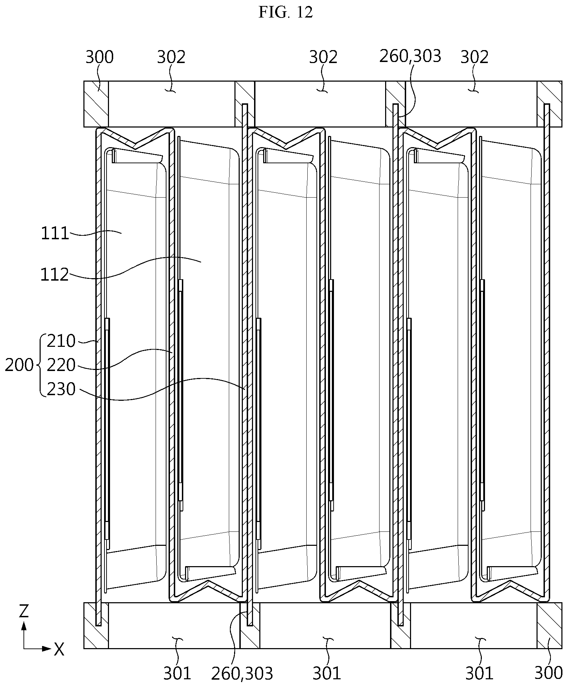

The effect of this configuration of the present disclosure will be explained based on FIGS. 12 to 15. FIGS. 12 to 15 are diagrams to explain a modified example of the cell cover and the resulting expansion of the venting region when a thermal event occurs in the battery pack according to the present disclosure.

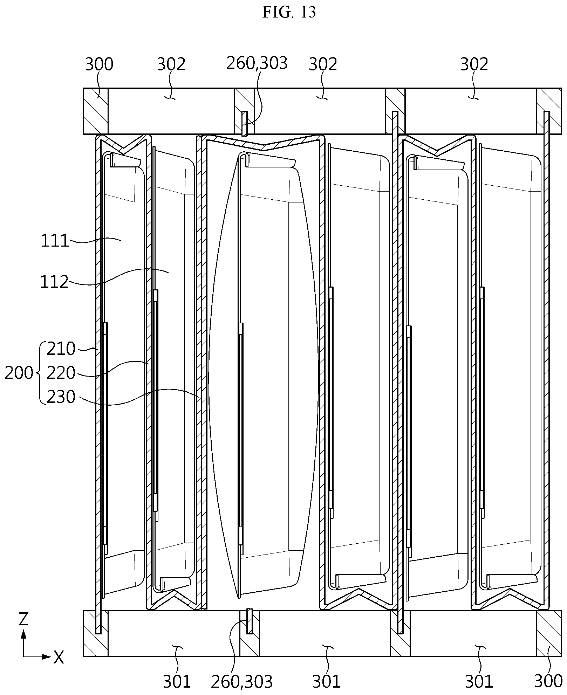

First, FIG. 12 is a diagram before a thermal event occurs in the battery pack 10. Additionally, the insert pin 260 is inserted into the groove-shaped insert pin receiving portion 303. FIG. 13 is a diagram after a thermal event occurs in the battery pack 10 shown in FIG. 12 and swelling occurs.

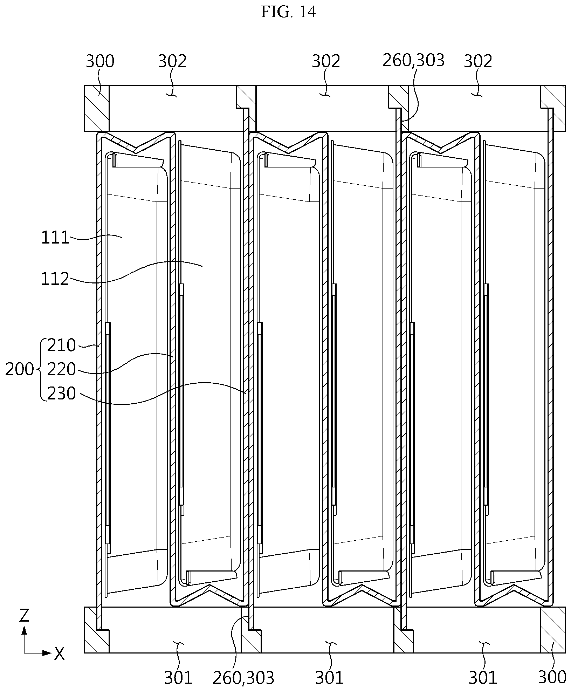

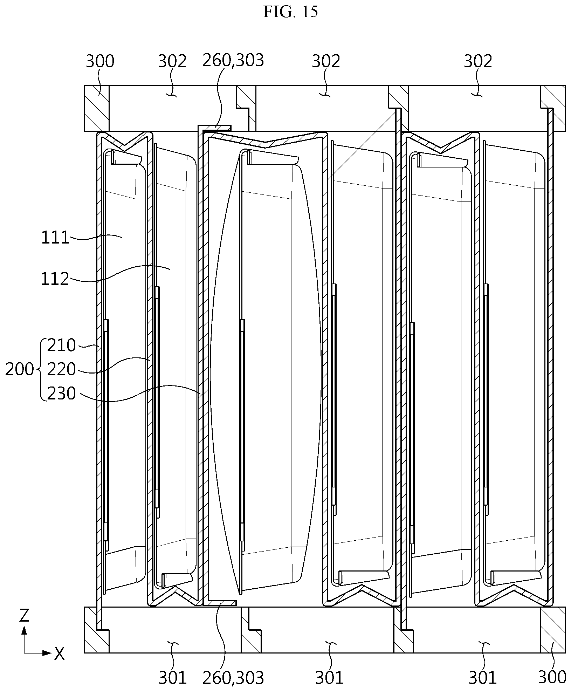

Likewise, FIG. 14 is a diagram before a thermal event occurs in the battery pack 10. Additionally, the insert pin 260 is seated in the multi-stage insert pin receiving portion 303. FIG. 15 is a diagram after a thermal event occurs in the battery pack 10 shown in FIG. 14 and swelling occurs.

Referring to FIGS. 12 to 15, before swelling phenomenon occurs (state of FIGS. 12 and 14), fixation between the pack case 300 and the cell cover 200 may be secured through the insert portion 261 of the insert pin 260, and with the cell bank alone, the battery pack 10 may be used without heat accumulation by using the upper venting portion 302 and the lower venting portion 301 at the corresponding positions. When swelling phenomenon occurs (state of FIGS. 13 and 15), the venting region may be expanded to the upper venting portion 302 or the lower venting portion 301 adjacent thereto by utilizing the deformation portion 262 of the insert pin 260. In particular, as described above, since the upper cover unit 240 and/or the lower cover unit 250 are at least partially flattened due to the swelling phenomenon and at the same time the deformation portion 262 is ruptured or folded, the venting region may be easily expanded. In other words, if swelling occurs in any cell unit 100, that cell unit 100 is expanded so that the upper venting portion 302 and the lower venting portion 301 of other cell units can be used as venting regions. In other words, not only the upper venting portion 302 and the lower venting portion 301 of the cell bank alone can be used, but also the upper venting portion 302 and the lower venting portion 301 of another cell unit can be used in parallel. Therefore, when a sequential thermal event occurs due to heat transfer, since the venting region expands, gas can be discharged more quickly to relieve heat accumulation.

FIG. 16 is a drawing schematically showing a partial cross-section of the battery pack according to the present disclosure.

Referring to FIG. 16, the battery pack 10 may include a thermal resin R.

The thermal resin R may be interposed in at least some of the space between the cell cover 200 and the pack case 300 and the space between the plurality of pouch-type battery cells 110 and the pack case 300. That is, the thermal resin R may be interposed in at least part of the space between the cell unit 100 and the pack case 300.

According to this configuration in the present disclosure, when the cell unit 100 is stored in the pack case 300, dual cooling in which heat of the pouch-type battery cell 110 is dissipated in the upper and lower directions of the cell unit 100 is possible, and the thermal resin R may act to promote heat transfer between the cell cover 200 and the pack case 300.

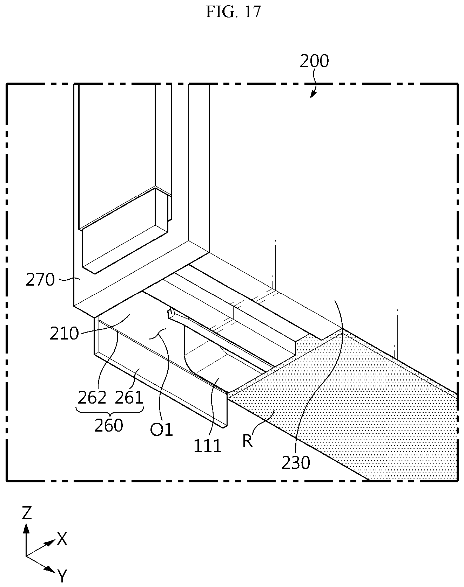

FIG. 17 is a drawing showing the bottom of the cell unit included in the battery pack according to the present disclosure.

Referring to FIG. 17, the thermal resin R may not be provided in the space corresponding to the upper venting portion 302 and the lower venting portion 301. The thermal resin R may be interposed so that one end or both ends of the longitudinal direction (the extension direction of the Y-axis) of the lower opening O1 are opened. The open space is communicated with the upper venting portion 302 and the lower venting portion 301 so that gas generated from the pouch-type battery cell 110 may be discharged to the outside of the pack case 300.

The battery pack 10 according to the present disclosure may further include a battery management system (BMS) and a battery disconnect unit (BDU). The BMS is mounted in the inner space of the pack case 300 and may be configured to overall control the charging and discharging operations and data transmission and reception operations of the pouch-type battery cell 110. The BMS may be provided in a battery pack unit rather than a battery module unit. More specifically, the BMS may be arranged to control the charge/discharge state, power state, and performance state of the pouch-type battery cell 110 through the pack voltage and pack current. The BMS estimates the state of the battery cell 110 in the battery pack 10 and manages the battery pack 10 using the estimated state information. For example, the state information of the battery pack 10 such as SOC (State Of Charge), SOH (State Of Health), maximum input/output power allowance, and output voltage of the battery pack 10 is estimated and managed. Also, using this state information, the charging or discharging of the battery pack 10 is controlled, and it is also possible to estimate the replacement time of the battery pack 10. The BDU may be configured to control the electrical connection of the battery cell 110 to manage the power capacity and functions of the battery pack 10. For this purpose, the BDU may include a power relay, current sensor, and fuse. The BDU is also a configuration provided in a battery pack unit rather than a battery module unit, and various disconnect units known at the time of filing the present disclosure can be employed.

In addition, the battery pack 10 according to the present disclosure may further include various components of battery packs known at the time of filing the present disclosure. For example, the battery pack 10 according to an embodiment of the present disclosure may further include a manual service disconnector (MSD) that allows a worker to cut off power by manually disconnecting the service plug. In addition, the MSD may further include flexible busbars or cables for interconnecting a plurality of battery cells having an n × n arrangement as mentioned above.

However, the present disclosure may apply the structure applied to the battery pack 10 described above to the battery module. In other words, the structure of the pack case can be applied to the module case to store a plurality of cell units 100 in the module case, and the module case can have a venting unit to form a battery module. One or more such battery modules may be stored in the inner space of the pack case, and the battery module includes a plurality of pouch-type battery cells 110 and the cell covers 200 as described above, and may include a module case that stores the plurality of pouch-type battery cells 120 in the inner space (the structure of the pack case 300 of the battery pack 10 according to the present disclosure as described above can be used as is).

The battery pack 10 according to the present disclosure or the battery module described here can be applied to a variety of devices. These devices are typically transportation means such as electric bicycles, electric vehicles, and hybrid vehicles, but the present disclosure is not limited thereto. In particular, the battery pack 10 is suitable for use as a battery pack for electric vehicles. Additionally, the battery pack 10 can be used as an energy source for the ESS.

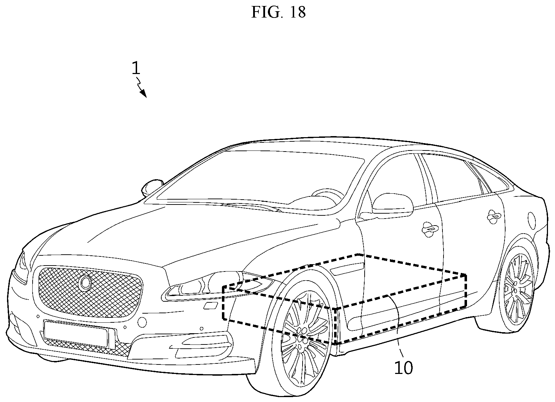

FIG. 18 is a drawing showing a vehicle 1 according to the present disclosure.

Referring to FIG. 18, the vehicle 1 may include the battery pack 10 according to the present disclosure described above. Additionally, the vehicle 1 according to the present disclosure may further include various other components included in the vehicle 1 in addition to the battery pack 10. For example, the vehicle 1 according to the present disclosure may further include a vehicle body, a motor, a control device such as an ECU (electronic control unit), etc., in addition to the battery pack 10 according to the present disclosure.

The battery pack 10 may be installed at a predetermined location within the vehicle 1. The battery pack 10 may be used as an electric energy source to drive the vehicle 1 by providing driving force to the motor of the electric vehicle. In this case, the battery pack 10 has a high nominal voltage of 100 V or higher.

The battery pack 10 may be charged or discharged by an inverter depending on the operation of the motor and/or internal combustion engine. The battery pack 10 may be charged by a regenerative charging device combined with a brake. The battery pack 10 may be electrically connected to the motor of the vehicle 1 through an inverter.

In this way, the battery pack 10 provided in the vehicle 1 may provide electrical energy required for various operations of the vehicle 1. Additionally, since the battery pack 10 has the various effects mentioned above, the vehicle 1 including the same may also have those effects.

As a specific example, the battery pack 10 includes a cell cover 200, so the module case can be omitted, and thus the battery pack 10 can have high energy density. Energy density refers to the amount of energy stored per unit weight. As the energy density of the battery pack increases, more energy is stored in the battery pack for the same weight. Therefore, the of vehicle 1 including the battery pack 10 can be used in various ways, such as increasing the driving distance on a single charge, faster acceleration, carrying more luggage, and making the interior space larger. Additionally, as the energy density of the battery pack increases, the battery pack becomes lighter for the same energy. If the battery pack 10 becomes lighter and the vehicle 1 including the same becomes lighter, this also has many advantages, such as improved acceleration, improved energy efficiency, and improved durability.

To give another specific example, the battery pack 10 may have high safety. Since a vehicle is an object directly related to human life, safety is something that can never be compromised. There is always a risk of fire in the pouch-type battery cell 110 due to the physical characteristics of lithium. However, since the battery pack 10 according to the present disclosure includes the cell cover 200, even if a thermal event occurs in the pouch-type battery cell 110, it is possible to prevent the thermal event from transferring to other parts. Therefore, the vehicle 1 including the battery pack 10 ensures safety against fire.

As described above, the present disclosure has been described with a focus on preferred embodiments with reference to the accompanying drawings, but it is clear to those skilled in the art that many various obvious modifications can be made from this description without departing from the scope of the present disclosure. Accordingly, the scope of the present disclosure should be construed in terms of the appended claims to include such many modified examples.

### [Reference numerals]

1: vehicle
10: battery pack
100: cell unit
110: battery cell
111: first battery cell
112: second battery cell
200: cell cover
220: partition cover unit
210: first side cover unit
230: second side cover unit
240: upper cover unit
250: lower cover unit
O1: lower opening
O2: upper opening
P1: first particle pocket
P2: second particle pocket
241, 243, 251, 253: side portion
242, 252: central portion
260: insert pin
261: insert portion
262: deformation portion
270: side cover
300: pack case
310: case body
320: end cover
330: top cover
301: lower venting portion
302: upper venting portion
303: insert pin receiving portion
400: busbar assembly
R: thermal resin

## Claims

1. A battery pack, comprising:
a plurality of pouch-type battery cells;
a pack case configured to store the pouch-type battery cells in an inner space thereof; and
a cell cover configured to at least partially surround an exterior of at least a first battery cell and a second battery cell, which are adjacent to each other among the plurality of pouch-type battery cells, in the inner space of the pack case,
wherein the cell cover includes:
a partition cover unit disposed between one side of the first battery cell and one side of the second battery cell to partition the first battery cell and the second battery cell;
a first side cover unit facing the partition cover unit to cover the other side of the first battery cell;
a second side cover unit facing the partition cover unit to cover the other side of the second battery cell;
an upper cover unit connected to a top of the first side cover unit at a top of the partition cover unit to surround an upper side of the first battery cell; and
a lower cover unit connected to a bottom of the second side cover unit at a bottom of the partition cover unit to surround a lower side of the second battery cell.

2. The battery pack according to claim 1, wherein the first battery cell is placed in a standing state between the first side cover unit and the partition cover unit, and
wherein the second battery cell is placed in a standing state between the second side cover unit and the partition cover unit.

3. The battery pack according to claim 2, wherein the cell cover includes:
a lower opening through which the lower part of the first battery cell is exposed toward the inner surface of the pack case; and
an upper opening through which an upper part of the second battery cell is exposed toward the inner surface of the pack case.

4. The battery pack according to claim 2, wherein the upper cover unit has a first particle pocket configured to be spaced apart from the first battery cell and configured to collect particles ejected from the first battery cell when a thermal event occurs, and
wherein the lower cover unit has a second particle pocket configured to be spaced apart from the second battery cell and configured to collect particles ejected from the second battery cell when a thermal event occurs.

5. The battery pack according to claim 4, wherein the upper cover unit is configured such that at least one of both side portions protrudes upward and a central portion connected to both side portions is concave downward, and
wherein the lower cover unit is configured such that at least one of both side portions protrudes downward and a central portion connected to both side portions is concave upward.

6. The battery pack according to claim 5, wherein the upper cover unit gradually protrudes from the central portion to at least one of the both side portions that protrudes upward, and
wherein the lower cover unit gradually protrudes from the central portion to at least one of the both side portions that protrudes downward.

7. The battery pack according to claim 3, wherein the pack case includes:
a lower venting portion provided in at least some of positions corresponding to the lower opening so that gas generated from the first battery cell is discharged to the outside through the lower opening; and
an upper venting portion provided in at least some of positions corresponding to the upper opening so that gas generated from the second battery cell is discharged to the outside through the upper opening.

8. The battery pack according to claim 7, wherein the cell cover has an insert pin protruding from at least one of the first side cover unit and the second side cover unit toward the inner surface of the pack case to be inserted into the pack case, and
wherein the pack case has an insert pin receiving portion formed on the inner surface to accommodate the insert pin.

9. The battery pack according to claim 8, wherein the insert pin and the insert pin receiving portion are located adjacent to at least one of the upper venting portion and the lower venting portion.

10. The battery pack according to claim 8, wherein the insert pin includes:
an insert portion inserted into the pack case; and
a deformation portion provided at a location where the insert portion is connected to at least one of the first side cover unit and the second side cover unit.

11. The battery pack according to claim 10, wherein the deformation portion is provided at the same height as the inner surface of the pack case when the insert pin is inserted into the pack case.

12. The battery pack according to claim 7, wherein the battery pack includes a thermal resin interposed in at least some of the space between the cell cover and the pack case and the space between the plurality of pouch-type battery cells and the pack case.

13. The battery pack according to claim 12, wherein the thermal resin is not provided in the spaces corresponding to the upper venting portion and the lower venting portion.

14. The battery pack according to claim 1, wherein the cell cover is configured to partially surround the pouch-type battery cell so that at least one side of the surrounded pouch-type battery cell is exposed to the outside.

15. The battery pack according to claim 1, wherein the cell cover is configured so that at least one side of the surrounded pouch-type battery cell is exposed toward the inner surface of the pack case.

16. The battery pack according to claim 1, wherein the cell cover is placed directly on the pack case.

17. The battery pack according to claim 1, wherein the cell cover includes an insulating coating layer on the inner surface.

18. The battery pack according to claim 1, wherein the cell cover is provided in plurality to be adjacent to each other, and
wherein an adhesive member is provided to at least one of the first side cover unit and the second side cover unit of the cell covers adjacent to each other.

19. A vehicle, comprising the battery pack according to any one of claims 1 to 18.
